# EUROPÄISCHE PATENTANMELDUNG

(11) **EP 1 890 106 A1**
(43) Veröffentlichungstag der Anmeldung: **20.02.2008**
(21) Anmeldenummer: 07015656.7
(22) Anmeldetag: 09.08.2007
(51) Int. Cl.: G01B 15/02, H01B 7/02

(54) **Verfahren zur Messung der Wanddicke einer Ummantelung aus Kunststoff für eine elektrische Ader oder für ein Kabel, insbesondere Starkstromkabel**

(30) Priorität: 19.08.2006 DE 102006039031
(71) Anmelder: SIKORA AG, 28307 Bremen (DE)
(72) Erfinder: Sikora, Harald, 28357 Bremen (DE)
(74) Vertreter: Hauck Patent- und Rechtsanwälte

(57) **Zusammenfassung**

Verfahren zur Messung der Wanddicke einer Ummantelung aus Kunststoff einer elektrischen Ader oder eines Kabels, insbesondere Starkstromkabels mit mindestens einer Ader, wobei das Absorptionsvermögen des an die Kunststoffummantelung angrenzenden Materials annähernd gleich oder ähnlich dem der Kunststoffummantelung ist, wobei die Ader oder das Kabel senkrecht zu seiner Erstreckung mit einer Röntgenstrahlung von einer Seite bestrahlt und auf der gegenüberliegenden Seite aus dem Verlauf der Intensität der detektierten Röntgenstrahlung die Wanddicke der ummantelten Ader oder des Kabels bestimmt wird, wobei das Material der Kunststoffummantelung oder ein an die Kunststoffummantelung angrenzendes Kunststoffmaterial vor der Wanddickenmessung zwecks Veränderung des Absorptionsvermögens geschäumt wird.

## Beschreibung

Die Erfindung bezieht sich auf ein Verfahren nach dem Oberbegriff des Patentanspruchs 1.

Der übliche Aufbau von Starkstromkabeln ist der, daß mehrere Leiterstränge von einer Ummantelung aus Kunststoff umgeben sind. Die Ummantelung kann der Isolation dienen und auch dem mechanischen Schutz. Die einzelnen Leiter sind ihrerseits mit einer Isolationsschicht umgeben. Diese sind hier als Adern bezeichnet. Unabhängig davon, ob die Adern einen runden oder sektorförmigen Querschnitt aufweisen, ergeben sich zwischen der Außenseite der Adern und der Innenseite der Ummantelung, die angestrebtermaßen im Querschnitt kreisförmig ist, Zwickel und Zwischenräume. Es ist bekannt, diese Zwischenräume mit einem Füllmaterial aufzufüllen, das darüber hinaus dazu dient, bei der Extrusion die Kreisform für die Ummantelung zu erzielen.

Das Füllmaterial ist aus Kostengründen meist minderwertiger Kunststoff, beispielsweise Recycling-PVC. Die Ummantelung, die ebenfalls häufig aus PVC hergestellt wird, ist hingegen hochwertiger, um die gewünschte isolierende bzw. Schutzeigenschaft zu erzielen. Es ist auch bekannt, als Material PE oder EPR einzusetzen.

Aus Kostengründen wird angestrebt, die Wanddicke der Ummantelung nicht größer als notwendig auszuführen. Die Wanddicke ist durch eine erwünschte Isolations- oder Schutzfähigkeit der Ummantelung oder durch allgemeine Vorschriften vorgegeben. Ein Mehr an Wanddicke der Ummantelung führt zu einer unnötigen Erhöhung des Materialeinsatzes. Es ist daher schon seit langem bekannt, die Wanddicke der Ummantelung derartiger Kabel zu messen, um nach Maßgabe der Meßwerte die Extrusion der Ummantelung zu steuern.

Ein übliches Verfahren zur Messung der Wanddicke einer Kunststoffummantelung besteht in der Durchstrahlung mit Röntgenstrahlung. Dieses Verfahren ist jedoch bei den angesprochenen bekannten Kabeln nicht immer befriedigend, weil der Kontrast zwischen dem Kunststoff der Ummantelung und dem an die Ummantelung angrenzenden Material, z.B. Füllmaterial, zu gering ist. Insbesondere ist der Kontrast klein, wenn das Füllmaterial aus gleichem, wenn auch minderwertigerem Kunststoff als die Ummantelung besteht.

Eine ähnliche Problematik ergibt sich bei Adern eines Kabels, d.h. ummantelten Leitern z.B. aus Aluminium. Das Absorptionsvermögen von Aluminium für Röntgenstrahlung ähnelt dem von z.B. PVC. Eine Röntgenmessung zur Wanddickenbestimmung der Ummantelung führt nicht zu zufriedenstellenden Resultaten.

Daher liegt der Erfindung die Aufgabe zugrunde, ein Verfahren anzugeben, mit dem bei mit Kunststoff ummantelten Adern und Kabeln der Kontrast der Ummantelung zum angrenzenden Material bei einer Wanddickenmessung der Ummantelung mit Hilfe der Röntgentechnik verbessert wird.

Diese Aufgabe wird durch ein Verfahren mit den Merkmalen des Anspruchs 1 gelöst.

Zur Erzielung eines ausreichenden Kontrastes wird nach dem erfindungsgemäßen Verfahren die Kunststoffummantelung einer Ader oder ein an die Kunststoffummantelung angrenzendes Kunststoffmaterial geschäumt. Das Aufschäumen des Kunststoffs erfolgt vorzugsweise während der Extrusion mit Hilfe eines Gases, z.B. Stickstoff. Alternativ ist auch ein chemisches Aufschäumen möglich.

Das Aufschäumen von Kunststoff z.B. auf physikalischem Wege mit Hilfe eines Gases ist an sich bekannt. Es ist auch bekannt, den Isolationsmantel von Hochfrequenzkabeln zu verschäumen. Zweck dieser Maßnahme ist, die relative Elektrizitätskonstante zur Verbesserung der Übertragungsleistung zu reduzieren. Bei der Erfindung hingegen dient das Aufschäumen des Kunststoffmaterials dazu, den Kontrast zu dem Kunststoff der Ummantelung oder dem Leiter zu vergrößern. Mit Hilfe der Erfindung ist es daher leichter möglich, die Wanddicke einer Ummantelung bei Kabeln, insbesondere bei Starkstromkabeln, zu messen. Fehlerhafte Messungen werden somit vermieden und damit auch unerwünschtes Unter- und Überschreiten der gewünschten Wanddicke.

Die Erfindung hat außerdem den Vorteil, daß der Einsatz von Material verringert wird. Durch das Aufschäumen wird die zu verwendende Menge des Materials pro Volumeneinheit verringert.

Die Erfindung wird nachfolgend anhand eines Ausführungsbeispiels erläutert.

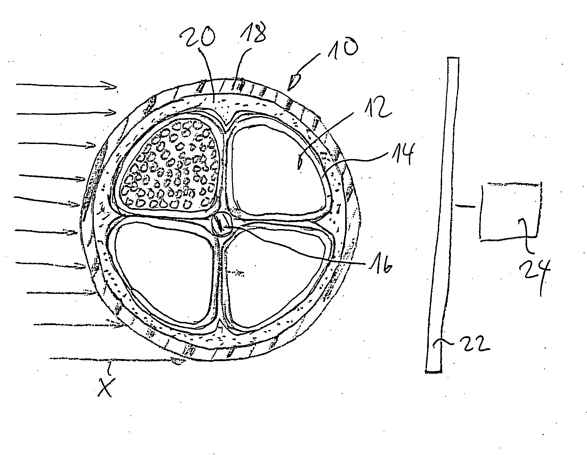

In der einzigen Figur ist ein Schnitt durch ein Starkstromkabel dargestellt.

Das Kabel 10 nach der Figur weist vier im Schnitt sektorförmige Adern 12 auf, welche von einer Isolationsschicht 14 umgeben sind. In der Figur ist nur eine Ader im Schnitt mit Einzelleitern dargestellt. Im Zwickel zwischen den Adern 12 ist ein im Schnitt kreisförmiger Strang 16 aus Kunststoff eingelegt. Die Adern 12 sind von einer gemeinsamen Kunststoff-Ummantelung 18 umgeben, die im Schnitt kreisförmig ist und aus mehreren Schichten bestehen kann. Zwischen der Ummantelung 18 und den Adern 12 ist ein Füllmaterial 20 angeordnet. Das Füllmaterial besteht zum Beispiel aus Recycling-PVC, während die Ummantelung 18 aus Rein-PVC besteht. Das Füllmaterial 20 ist aufgeschäumt. Die Aufschäumung findet vorzugsweise während der Extrusion entweder physikalisch oder chemisch statt. Bei der Extrusion wird das Bündel der Adern 12 mit ihrer Ummantelung 14 durch den Extruder geschickt und nacheinander mit dem Füllmaterial und der Ummantelung 18 im Koextrusionsverfahren beschichtet. Bei der Extrusion des Füllmaterials 20 z.B. wird in ausreichender Menge Gas zugeführt, wodurch eine Verschäumung des Füllmaterials 20 stattfindet.

Bei der Messung der Wanddicke der Ummantelung 18 wird mit Hilfe einer Röntgenquelle das Kabel 10 quer bestrahlt, wie bei X angegeben. Auf der gegenüberliegenden Seite ist ein Röntgenbilddetektor 22, z.B. ein Zeilensensor, angeordnet, der den Verlauf der auftreffenden Intensität der Röntgenstrahlung mißt. Es versteht sich, daß die Ummantelung 18, die Adern 12 und auch das Füllmaterial 20 die Röntgenstrahlung unterschiedlich absorbieren. Dies wird dazu ausgenutzt, die Wanddicke der Ummantelung 18 festzustellen, da dies für das Herstellungsverfahren von Bedeutung ist. Dadurch, daß das Füllmaterial 20 geschäumt ist, ist die Absorption der Röntgenstrahlung deutlich reduziert, auch wenn das Füllmaterial 20 chemisch dem Material der Ummantelung 18 gleich ist.

Der Röntgendetektor 22 ist an eine Meßvorrichtung 24 angeschlossen, welche die Wanddicke der Ummantelung aus den vom Detektor 22 kommenden Signalen bestimmt und z.B. an eine Steuervorrichtung für einen nicht gezeigten Extruder weiterleitet.

## Patentansprüche

1. Verfahren zur Messung der Wanddicke einer Ummantelung aus Kunststoff einer elektrischen Ader oder eines Kabels, insbesondere Starkstromkabels mit mindestens einer Ader, wobei das Absorptionsvermögen des an die Kunststoffummantelung angrenzenden Materials annähernd gleich oder ähnlich dem der Kunststoffummantelung ist, wobei die Ader oder das Kabel senkrecht zu seiner Erstreckung mit einer Röntgenstrahlung von einer Seite bestrahlt und auf der gegenüberliegenden Seite aus dem Verlauf der Intensität der detektierten Röntgenstrahlung die Wanddicke der ummantelten Ader oder des Kabels bestimmt wird, **dadurch gekennzeichnet, daß** das Material der Kunststoffummantelung oder ein an die Kunststoffummantelung angrenzendes Kunststoffmaterial vor der Wanddickenmessung zwecks Veränderung seines Absorptionsvermögens geschäumt wird.

2. Verfahren nach Anspruch 1, **dadurch gekennzeichnet, daß** das Kunststoffmaterial physikalisch mittels eines Gases, insbesondere Stickstoff, oder chemisch geschäumt wird.

3. Verfahren nach Anspruch 1 oder 2, **dadurch gekennzeichnet, daß** bei einem Kabel ein Füllmaterial zwischen der Kabelummantelung und den ummantelten Adern geschäumt wird.

4. Verfahren nach Anspruch 1 oder 2, **dadurch gekennzeichnet, daß** eine isolierende Kunststoffummantelung um eine Ader mit einem Aluminiumleiter geschäumt wird.

5. Elektrische Ader oder elektrisches Kabel mit einer Ummantelung aus Kunststoff, wobei das an die Ummantelung angrenzende Material annähernd gleiches oder ähnliches Absorptionsvermögen wie die Kunststoffummantelung aufweist, **dadurch gekennzeichnet, daß** die Kunststoffummantelung oder ein an die Kunststoffummantelung angrenzendes Material auf der Innenseite der Ummantelung geschäumter Kunststoff ist.

6. Leiter oder Kabel nach Anspruch 5, **dadurch gekennzeichnet, daß** der geschäumte Kunststoff ein Füllmaterial zwischen äußerer Kunststoffummantelung und innerhalb der Kunststoffummantelung liegenden ummantelten Adern ist.

7. Leiter oder Kabel nach Anspruch 5, **dadurch gekennzeichnet, daß** die Kunststoffummantelung einer Ader mit Aluminiumleiter geschäumt ist.

8. Leiter oder Kabel nach einem der Ansprüche 5 bis 7, **dadurch gekennzeichnet, daß** das geschäumte Kunststoffmaterial Recyclingkunststoff ist.

9. Leiter oder Kabel nach einem der Ansprüche 5 bis 7, **dadurch gekennzeichnet, daß** als geschäumter Kunststoff PVC, PE oder EPR vorgesehen ist.
